# EUROPEAN PATENT APPLICATION

(11) **EP 2 006 793 A1**
(43) Date of publication of application: **24.12.2008**
(21) Application number: 07110676.9
(22) Date of filing: 20.06.2007
(51) Int. Cl.: G06K 7/00, G06K 7/10, G06K 17/00, H01P 3/12, H01P 11/00

(54) **Waveguide device, container including the same, and method for manufacturing a waveguide device**

(71) Applicant: YFY RFID Technologies Company Limited, Road Town, Tortola (VG)
(72) Inventor: Lu, Hung-Hsin, Taipei City 116 (TW); Hsiao, Ching-Tsan, Taichung City 403 (TW); Chao, Yu-Shen, Neihu District Taipei City 114 (TW)
(74) Representative: Viering, Jentschura & Partner

(57) **Abstract**

A waveguide device comprises a case and an RFID tag. The case forms space inside and has at least one part made of conductive material, wherein the space allows an RF wave to pass through. The RFID tag, mounted on an interior side of the case, comprises an antenna disposed in the space to receive the RF wave, and a memory for recording data. With such a structure, the data can be propagated in the space in the form of RF waves without significant decay in response to the receipt of the RF wave. The waveguide device is designed to be placed in a container.

## Description

### BACKGROUND OF THE INVENTION

### Field of the Invention

The present invention relates generally to a waveguide device for RFID, and more specifically relates to a waveguide device capable of being disposed in a container for RFID and a method for manufacturing such a waveguide device.

### Descriptions of the Related Art

Radio-frequency identification (RFID) is an automatic identification solution. It relies on RF waves to communicate between an RFID tag and a transmitter or a reader. Some of the current applications combine the transmitter and the reader into one apparatus. An RFID tag is a small object attached to or incorporated into an item, animal, or person for the purpose of identification, wherein the RFID tag stores the data corresponding to the item, animal, or person. To obtain the data, a reader can be installed nearby to receive the RF waves transmitted from the RFID tag. The data corresponding to the item, animal, or person are hence retrieved. Since the current technology can support RF wave propagation between an RFID tag and a reader or a transmitter from several meters away, RFID is able to be applied to many environments in which items are required to be identified or recorded wirelessly. One of the applications is the product management in warehouses.

Items, or products, are normally packed in a container to facilitate transportation and protect from collision. One way to record the information of the items in the container is to attach an RFID tag on the interior or exterior surface of the container, wherein the RFID tag carries the information. When these tagged containers are stacked in a warehouse or on a pallet, the readers nearby can receive the information through RF waves. All information would be then gathered electronically for the purpose of product management.

To apply RFID to product management, there are two conditions that influence the performance of RFID. One is that, when tagged containers are stacked in a warehouse or on a pallet, some of the RFID tags are surrounded not by free space, but by items and containers. Such an environment tends to block an incoming RF signal from reaching certain containers deep inside. This causes the failure of triggering all of the RFID tags on these containers. The other condition is that the items in the containers may hold materials which bounce back or absorb RF waves. As a result, some RFID tags may not be triggered or the RF signals transmitted from certain RFID tags are unable to penetrate. Either condition results in the disconnection between the reader and the RFID tags. If information coming from some RFID tags is missing, the product database built based on RFID is unreliable.

Accordingly, a solution to improving RF-wave propagation in the environment of having multiple items packed in containers is desired in the industrial field.

### SUMMARY OF THE INVENTION

One aspect of the present invention is to provide a waveguide device which can be placed in a container. The waveguide device comprises a conductive element, a filler, an RFID tag, and a case. An interior of the conductive element forms space for an RF wave to pass through. The filler is made of RF-friendly material and disposed in the space. The RFID tag comprises an antenna exposed to the space to receive the RF wave, and a memory for recording data. The case is configured to assemble the conductive element, the filler, and the RFID tag. With such a structure, the data can be propagated in the space in the form of RF waves without significant decay in response to the receipt of the RF wave.

Another aspect of the present invention is to provide a method for manufacturing the above-mentioned waveguide device. The method comprises steps of: forming a filler; fixing an RFID tag to the filler; coating conductive slices on a part of a plane; converting the plane into a case to make the conductive slices located on two opposite surfaces of the case; and disposing the filler with the RFID tag into the case to produce the waveguide device.

A further aspect of the present invention is to provide another waveguide device which can be placed in a container. The waveguide device comprises a case and an RFID tag. The case forms space inside and has at least one part made of conductive material, wherein the space allows an RF wave to pass through. The RFID tag, mounted on an interior side of the case, comprises an antenna disposed in the space to receive the RF wave, and a memory for recording data. With such a structure, the data can be propagated in the space in the form of RF waves without significant decay in response to the receipt of the RF wave.

When containers with waveguide devices of the present invention inside are stacked, the space in the waveguide devices substantially forms an RF wave channel. RF signals transmitted from a transmitter may pass through the stack of containers via the RF wave channel without being blocked, bounced back or absorbed. Similarly, RF signals transmitted from RFID tags in the containers may also pass through the stack of containers via the RF wave channel without being blocked, bounced back or absorbed. That is, writing data into RFID tags or retrieving data from RFID tags can be proceeded successfully even if the RFID tags are located in a stack of containers. The present invention effectively improves the reliability of RFID.

### BRIEF DESCRIPTION OF THE DRAWINGS

FIG. 1 illustrates a first embodiment of the present invention;

FIG. 2 illustrates an environment where the first embodiment is placed in a container;

FIG. 3 illustrates an environment where containers are stacked for RFID, wherein the containers comprise waveguide devices in accordance with the present invention;

FIG. 4 illustrates a second embodiment of the present invention;

FIG. 5A and FIG. 5B illustrate a third embodiment of the present invention;

FIG. 6 illustrates an expanded view of a case of the third embodiment;

FIG. 7 illustrates an environment where the third embodiment is placed in a container;

FIG. 8A-8F illustrate further examples of a filler of the third embodiment;

FIG. 9 is a flow chart of a fourth embodiment of the present invention;

FIG. 10A illustrates an example of a particular outline of a filler in accordance with the present invention; and

FIG. 10B illustrates another example of the particular outline of the filler in accordance with the present invention.

### DESCRIPTION OF THE PREFERRED EMBODIMENT

A waveguide device in accordance with the embodiments of the present invention provides space for RF waves to be propagated through a container in which the waveguide device is placed. When a plurality of containers are stacked, the space of the waveguide devices inside these containers forms a channel. The channel allows RF waves to be propagated in and out of the stack so that all of the RFID tags disposed in the waveguide devices can be triggered to execute data writing or reading no matter what kind of item placed in the containers.

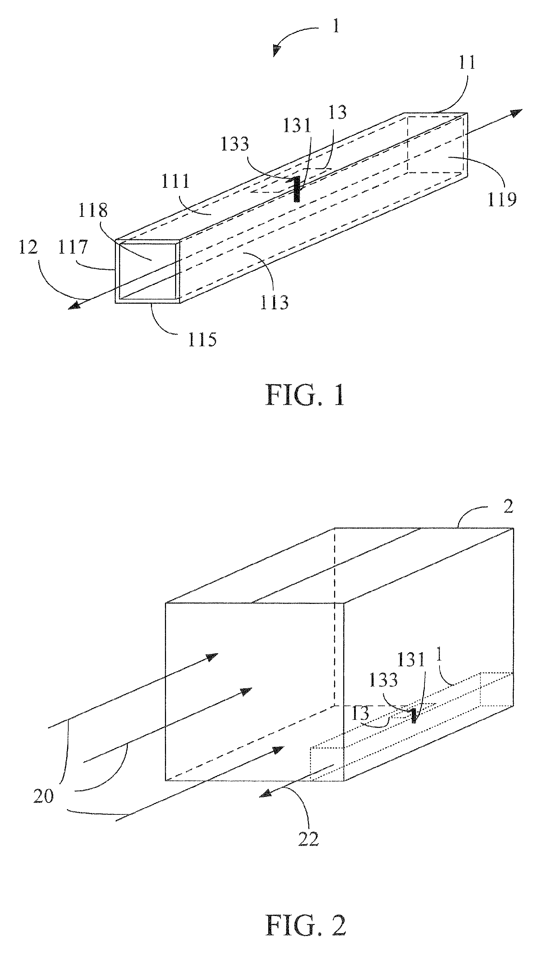

A first embodiment of the present invention is a waveguide device 1 as FIG. 1 shows. The waveguide device 1 comprises a case 11 and an RFID tag 13. The case 11 is built by four rectangular planes 111, 113, 115, 117 which are made of paper or plastics. More specifically, the case 11 is a rectangular pipe. The hollow part of the case 11 forms space. The interior side of each of the planes 111, 113, 115, 117 is coated with conductive material, such as gold, sliver, or copper. It is noted that the present invention is not limited to this. For example, only two opposite planes of the four planes 111, 113, 115, 117 coated with conductive material is also available. The RFID tag 13 is mounted on an interior side of the plane 111, and comprises an antenna 131 and a memory 133. Because the RFID tag 13 is mounted on the interior side of the plane 111 and has an angle between the antenna 131 and the memory 133, the antenna 131 is exposed to the space. The memory 133, connected to the antenna 131, is an IC which is able to record data. The space has two openings 118 and 119 at the two ends of the case 11. Since the rectangular planes 111, 113, 115, 117 are coated with conductive material, an RF wave entering the space from either the opening 118 or the opening 119 will be propagated along the direction 12 shown in FIG. 1, and finally exit from the other opening.

As FIG. 2 shows, the waveguide device 1 is designed to fit an edge of a container 2. When the waveguide device 1 is placed in the edge, the space of the waveguide device 1 provides a clean room for an RF wave 20 to pass through. Even though the items packed in the container 2 are made of or carry material which bounces back or absorbs RF waves, the RF wave 20 still can pass through the container 2 without much decay through the space. The antenna 131 is, hence, able to receive the RF wave 20 clearly, whereby the RFID tag 13 can be triggered. If the RF wave 20 is transmitted for the purpose of writing data corresponding to the items into the RFID tag 13, the data would be written into the memory 133 after the antenna 131 receives them. Therefore, the memory 133 stores the data indicative of what the items are. If the data corresponding to the items have already been written in the memory 133 and the RF wave 20 is transmitted for the purpose of requesting the data, the data will be retrieved from the memory 133 and delivered out via the antenna 131 in the form of an RF wave 22 in response to the receipt of the RF wave 20. The RF wave 22 may be propagated out of the container 2 through the space without being bounced back or absorbed by the items in the container 2. A reader (not shown) receives the RF wave 22 thereby. The information of the items packed in the container 2 is now obtained.

It is noted that, although the container 2 is shown to place one waveguide device 1, the present invention is not limited to this. A container can be placed more than one waveguide device 1 if necessary.

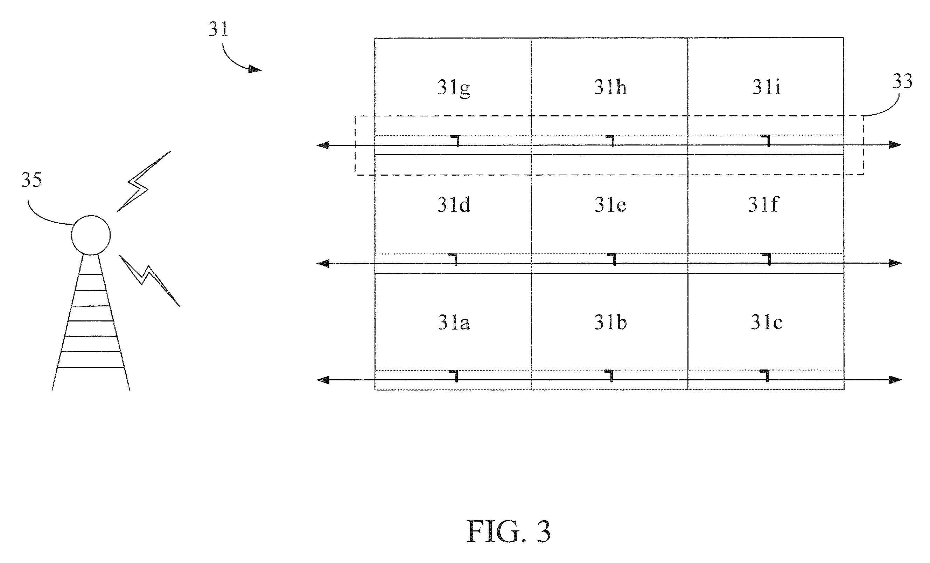

In the condition that a plurality of containers are stacked in a warehouse or on a pallet, the present invention reveals more advantages. FIG. 3 shows nine containers 31a-31i to exemplify a stack of containers 31 on a shelf in the warehouse or on the pallet. The containers 31a, 31b, 31c are placed in a row on the shelf or on the pallet. The containers 31d, 31e, 31f are placed in a row right above the containers 31a, 31b, 31c. The containers 31g, 31h, 31i are placed in a row right above the containers 31d, 31e, 31f. The waveguide devices of all of the containers 31a-31i are placed at the same corner thereof. Therefore, the waveguide devices in each row form a channel. For example, the waveguide devices of the containers 31g, 31h, 31i form a channel 33. The three rows form three channels. When a nearby transceiver 35 transmits an RF wave to try to trigger the RFID tags in the containers 31a-31i, the RF wave will pass through all of the containers 31a-31i via the channels. Each of the RFID tags can be triggered since they are disposed in the channels. After triggered, these RFID tags transmit their stored data out of the stack 31 via the channels as well in the form of RF waves, whereby the transceiver 35 can receive all of the RF waves without influenced by the items in the containers 31a-31i. The information of the items in the stack 31 is known.

Referring back to FIG. 1, coating conductive material on the interior side of each of the planes 111, 113, 115, 117 may use the technology of, for example, foil stamping, foil plating, or metallic ink pressing. Although the openings 118 and 119 of the waveguide device 1 are not covered, those skilled in the art may easily realize that the openings 118 and 119 can be covered by a plane, respectively. That is, the space in the case 11 becomes sealed or is surrounded by six planes. To meet the requirement of allowing RF waves to pass through, the surfaces of the two planes covering the openings 118 and 119 should be made of RF-friendly material, such as paper or plastics. The term "paper" herein comprises cardboards and corrugated boards.

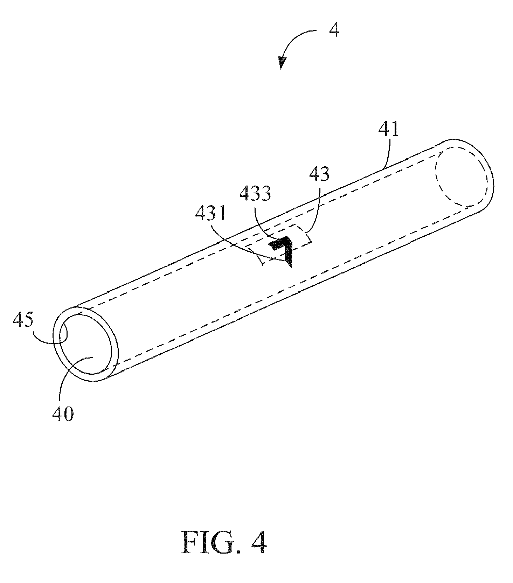

A second embodiment of the present invention is another waveguide device shown in FIG. 4. The waveguide device 4 of the second embodiment comprises a case 41, an RFID tag 43, and a conductive element 45. In contrast with the waveguide device 1, the case 41 has a cylindraceous shape which is made of cardboards. The hollow part inside the cylindraceous shape forms space 40. The conductive element 45 is a conductive slice rolled up as a cylinder whose sharp corresponds to the interior surface of the case 41 so that it can adhere to the interior surface of the case 41. The RFID tag 43 comprises an antenna 431 and a memory 433 which are similar to the antenna 131 and the memory 133. The RFID tag 43 adheres to the conductive element 45 in the manner that the antenna 431 is exposed to the space 40.

The waveguide device 4 is also designed to fit an edge of a container so that the space 40 provides a clean room for RF waves to pass through. Under the condition that a plurality of containers are stacked, the waveguide devices in the containers form channels. RF waves can pass through the stack via the channels. Similarly, even though the items packed in the containers are made of or carry material which bounces back or absorbs RF waves, RFID still can perform well.

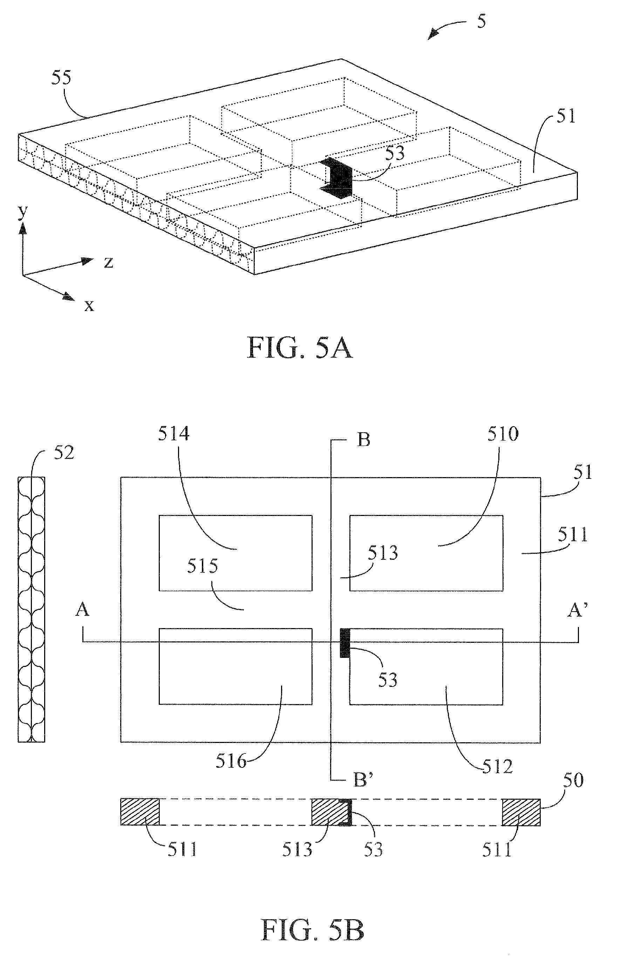

A third embodiment of the present invention is another waveguide device shown in FIG. 5A and FIG. 5B. The waveguide device 5 of the third embodiment comprises a filler 51, an RFID tag 53, and a case 55. The filler 51 is made of RF-friendly material, such as a corrugated board or polylone. For the sake of illustration, the corrugated board is selected in this embodiment. The purposes of the filler 51 are to brace a room for RF waves to pass through and to fix the RFID tag 53 in the room. In this embodiment, the filler 51 looks like a lattice window which comprises a rectangular frame 511, and two perpendicular shafts 513, 515 connected to the rectangular frame 511. This design creates four hollow parts 510, 512, 514, 516. The RFID tag 53 is bended to fit the thickness of the shaft 513 so that it can be fixed on the shaft 513 stably. The RFID tag 53 comprises an antenna exposed to the room to receive RF waves, and a memory for recording data. The case 55 is a cuboid whose interior space is configured to receive the filler 51 and the RFID tag 53.

The structure 52 of corrugated boards shown in FIG. 5B represents a cross section of the filler 51 along the line B-B'. The structure 52 comprises two layers. Each layer consists of a plurality of flutes. The current market provides many flute types with different flute heights, such as "A" flute, "B" flute, "C" flute, "E" flute, "F" flute, and "G" flute. The present invention is not limited to a particular flute type or the number of flute layers. The present invention defines the normal cross section of the flutes as the cross section cut along the line B-B', i.e., the structure 52. It is preferred that the propagation direction of the RF waves for triggering the RFID tag 53 faces the structure 52. More specifically, the RF waves are preferred to be propagated along the z axis as shown in FIG. 5A if the structure 52 faces the x-y plane.

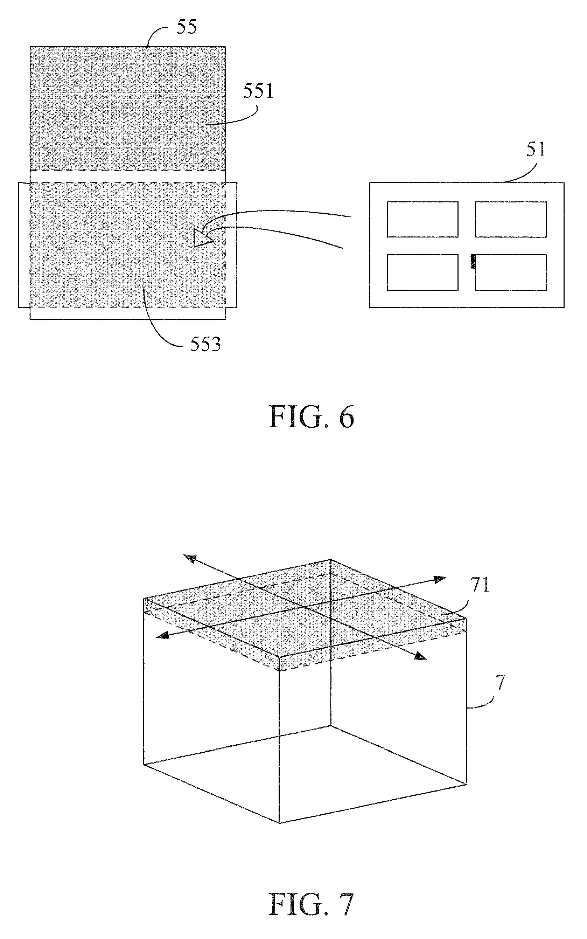

In addition to the filler 51 and the RFID tag 53, the waveguide device 5 further comprises a conductive element. In particular, the conductive element is two conductive slices attached to two surfaces of the case 55, wherein the two attached surfaces are opposite in space. FIG. 6 shows the expanded view of the case 55. Since the case 55 is a cuboid, it consists of six planes or units. The six units are all made of paper or plastics. The conductive slices are coated on the surfaces of the units 551, 553 of the case 55, which are marked with spots in the figure. The preferred coating technologies may be foil stamping, foil plating, or metallic ink pressing. After the coating, the filler 51 is placed on the unit 553, and then the units are converted into the case 55. The filler 55, the RFID tag 53, and the conductive slices are assembled in the case 55 thereby.

Referring to FIG. 5A and FIG. 6, the two units 551, 553 correspond to the top plane and the bottom plane of the case 55 when the case 55 is converted. That is, RF waves cannot penetrate the top plane and the bottom plane but can penetrate the four side planes of the case 55. Furthermore, the space between the two conductive slices, filled with the filler 51, is an RF-friendly environment as well. With such a structure, RF waves may be propagated in and out of the side planes, but fail to be propagated in or out of the top plane and the bottom plane.

FIG. 7 shows a container 7 with a receiving room 71 inside. The lower space of the container 7 is left to pack items. After the packing, the container 7 saves the receiving room 71 to locate the waveguide device 5 stably so the waveguide device 5 is above the items. After the waveguide device 5 is placed in the receiving room 71, the container 7 is sealed. The waveguide device 5 inside the container 7 provides a clean room for RF waves to pass through in two dimensions as the arrows point out. Even though the items are made of or carry material which bounces back or absorbs RF waves, the RF waves still can pass through the container 7 without much decay. The RF waves would be received by the antenna of the RFID tag 53. In response to the receipt, the RFID tag 53 is triggered to write data in or send data out of the memory of the RFID tag 53 without interference. Besides, when containers with the waveguide devices 5 are stacked in a warehouse or on a pallet as FIG. 3 shows, the waveguide devices 5 form a plurality of planar channels to facilitate the communication between a transceiver nearby and the RFID tags in the stack. It is noted that although FIG. 7 shows that the waveguide device 5 is disposed above the items, the present invention is not limited to this. The waveguide device 5 can be placed anywhere of the container 7. For example, the receiving room 71 can be designed under, aside, or even among the items according to the practice needs.

To adopt the third embodiment, containers are unnecessary to be stacked in a row or in a rectangular array. Any stack shape is acceptable as long as each of the containers stands against another one. Once each of the containers stands against at least one another container, the waveguide devices 5 of the two touched containers substantially connect together so that the propagation channel expands. If the power of an RF wave is strong enough, the channel will lead the RF wave to reach the farthest container of the stack.

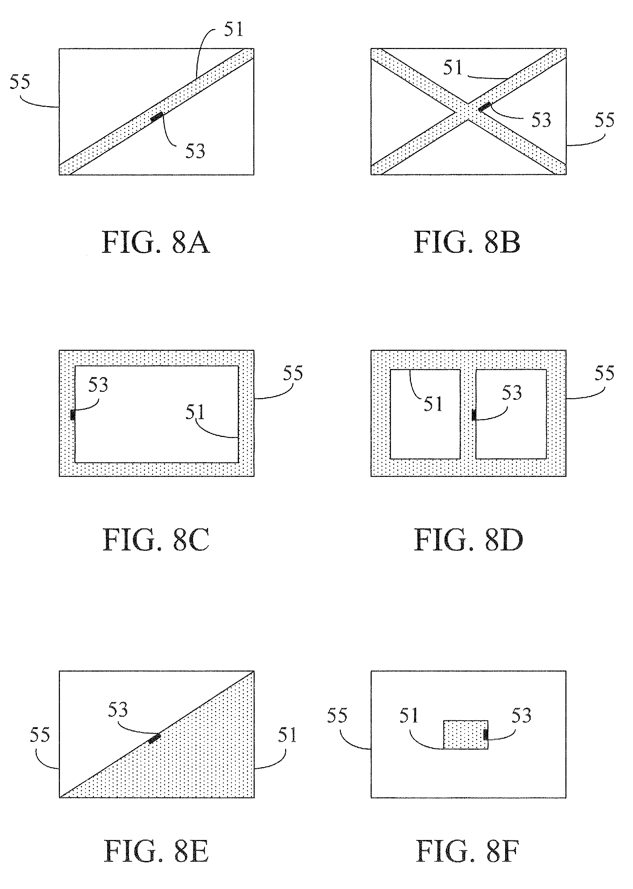

Although the shape of the filler 51 is a lattice window, this is just an example but not a limitation of the present invention. The filler 51 can have any shape. FIG. 8A-8F shows further examples. In FIG. 8A, the filler 51 is a shaft against a diagonal line of the case 55, and the RFID tag 53 is attached to the middle of the shaft. In FIG. 8B, the filler 51 is two crossed shafts against diagonal lines of the case 55, and the RFID tag 53 is attached to one of the shafts and close to the center of the "X" shape. In FIG. 8C, the filler 51 is a rectangular frame fitting the interior side of the case 55, and the RFID tag 53 is attached to one of the shorter edges. In FIG. 8D, the filler 51 comprises a rectangular frame with a shaft in between, and the RFID tag 53 is attached to the middle of the shaft. In FIG. 8E, the filler 51 has a triangular shape whose hypotenuse against a diagonal line of the case 55, and the RFID tag 53 is attached to the middle of the hypotenuse. The above-mentioned examples have the shapes either against at least one diagonal line of the case 55 or against the interior perimeter of the case 55, whereby the filler 51 may be placed in the case 55 stably. The RFID tag 53, hence, would not tumble. However, the filler 51 is not necessary to have a shape against the diagonal line or the interior perimeter of the case 55. As FIG. 8F shows, the filler 51 may be a smaller cuboid, and the RFID tag 53 is attached to one of the edges thereof. To fix the antenna in the space, the filler 51 can adhere to the top plane and/ or the bottom plane of the case 55.

In other embodiments, the waveguide device 5 may not comprise the filler 51 if the case 55 is firm enough to support the space inside the case 55. Under the circumstances, the RFID tag 53 may be attached to one of the interior surfaces of the case 55 as the first and second embodiment show.

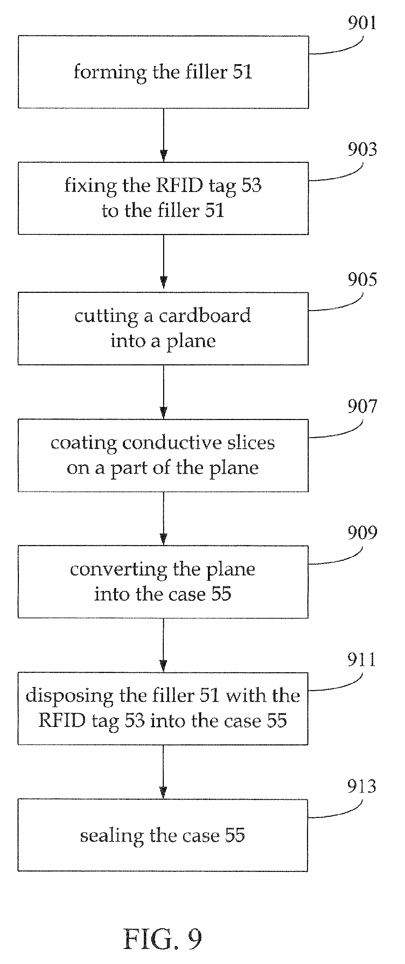

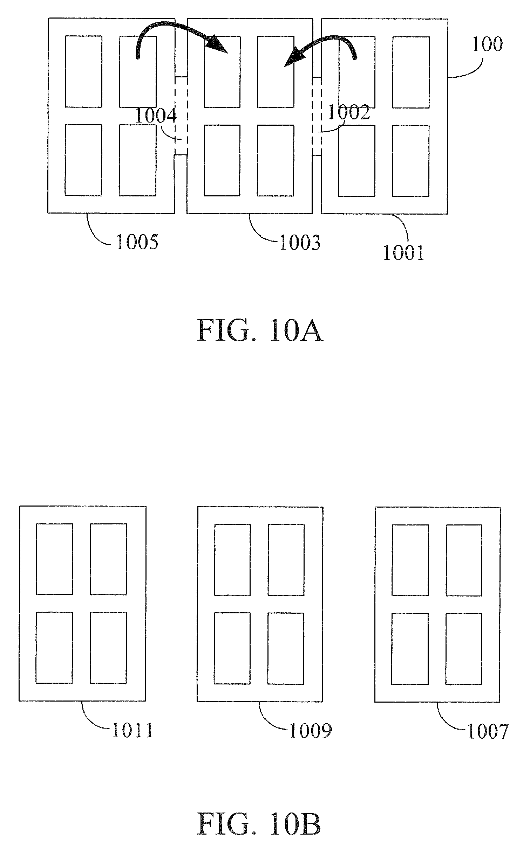

A fourth embodiment of the present invention is a method for manufacturing the waveguide device 5. The method comprises the steps shown in FIG. 9. In step 901, the filler 51 is formed. The method gives two examples to form the filler 51. The first example is to cut a corrugated board into a particular outline 100 first as FIG. 10A shows. The particular outline 100 is divided into three units 1001, 1003, 1005, which are connected together via connection elements 1002, 1004. Then the particular outline 100 is folded along the connection elements 1002,1004 to make the units 1001, 1003, 1005 stacked up on each other as the arrows show. The folded units 1001, 1003, 1005 provide enough space for RF waves to pass through. The second example, as FIG. 10 B shows, is to cut a corrugated board into three separate units 1007, 1009, 1011, to stack up the units 1007, 1009, 1011, and finally to fix the stacked units 1007, 1009, 1011 together. The stacked units 1007, 1009, 1011 also provide enough space for RF waves to pass through.

As shown in FIG. 10A and 10B, the filler 51 is cut into a shape comprising shafts and rectangular frames which form many hollow parts. To form the hollow parts, the step 901 further comprises a step of punching the filler 51 to generate these holes. As mentioned above, the material for building the filler 51 is not limited to corrugated boards. To allow RF waves to pass through, any RF-friendly material is available here. It is noted that the cutting steps can be performed by, for example, a flat bed die cutter or a computerized box cutting table. If a flat bed die cutter is used, the cutting is die-cutting. The punching step can be performed after or simultaneously with the cutting step. Provided that the cutting is die-cutting, the punching and cutting steps are performed at the same time.

Step 903 is then executed to fix the RFID tag 53 to the filler 51 so that the antenna of the RFID tag 53 can be exposed to the space in an intended direction and/or an intended angle. The intended direction and the intended angle provide the better receiving and transmission performance of the RFID tag 53.

Step 905 is then executed to cutting a piece of RF-friendly material into a plane. In particular, the plane is the expanded shape of the case 55 as shown in FIG. 6. The RF-friendly material may be paper or plastics. A cardboard is preferred.

After step 905 is executed, step 907 is then executed to coat two conductive slices on a part of the plane. In this step, the two conductive slices are coated on the two surfaces 551 and 553. The coating may be performed by using foil stamping, foil plating, or metallic ink press.

After the coating step, step 909 is then executed to convert the plane into the case 55 to make the two conductive slices located on two opposite surfaces of the case 55. In other words, the two conductive slices face each other when the case 55 is converted.

Step 911 is then executed to dispose the filler 51 with the RFID tag 53 into the case 55.

Finally, step 913 is executed to seal the case 55 so that the filler 51 would not drop out of the case 55. The waveguide device 5 is, hence, produced.

The waveguide devices in accordance with the present invention provide space for RF waves to pass through. With the antenna of an RFID tag being exposed to the space, RFID can be achieved. Furthermore, when containers with such a waveguide device inside are stacked, the space of the waveguide devices substantially forms channels. The RF waves delivered from transceivers and RFID tags in the containers are capable of passing through the stack of containers via the channels without blocked, bounced back or absorbed. The present invention indeed improves the reliability of RFID, especially in the applications of the requirement of quickly deriving the information of a stack of products. The applications comprise warehouse inventory, airline baggage, and retail inventory.

The above-mentioned embodiments are described to exemplify the present invention. These are not intended to limit the present invention from that described in the claims. Those skilled in this art may proceed with a variety of modifications and replacements based on the disclosures and suggestions as described without departing from the characteristics thereof. Although such modifications and replacements are not fully disclosed in the above descriptions, they are substantially covered in the appended claims.

## Claims

1. A waveguide device comprising:
a conductive element, an interior of the conductive element forming space for an RF wave to pass through;
a filler, made of RF-friendly material and disposed in the space;
an RFID tag, comprising:
an antenna, exposed to the space to receive the RF wave; and
a memory for recording data; and
a case for assembling the conductive element, the filler, and the RFID tag;
wherein the data is propagated in the space wirelessly in response to the receipt of the RF wave.

2. The waveguide device of claim 1, wherein the conductive element is a cylinder whose surface comprises conductive material.

3. The waveguide device of claim 1, wherein the conductive element comprises two conductive slices.

4. The waveguide device of claim 3, wherein each of the two conductive slices is attached to one surface of the case, and the two attached surfaces are opposite.

5. The waveguide device of claim 4, wherein the attachment is executed by using one of foil stamping, foil plating, and metallic ink pressing.

6. The waveguide device of claim 1, wherein at least two surfaces of the case are made of RF-friendly material for the RF wave to pass through.

7. The waveguide device of claim 1, wherein the case is made of paper or plastics.

8. The waveguide device of claim 1, wherein the case is a cuboid, and the filler comprises a shaft for fixing the antenna in the space.

9. The waveguide device of claim 1, wherein the case is a cuboid, and the filler comprises a triangular shape for fixing the antenna in the space.

10. The waveguide device of claim 1, wherein the case is a cuboid, and the filler comprises a rectangular frame for fixing the antenna in the space.

11. The waveguide device of claim 1, wherein the filler is made of a corrugated board.

12. The waveguide device of claim 11, wherein the corrugated board comprises a plurality of flutes, and a normal cross section of the flutes faces a propagation direction of the RF wave.

13. The waveguide device of claim 1, wherein the filler is made of polylone.

14. The waveguide device of claim 1, wherein the filler is hollow.

15. A container comprising:
a waveguide device, comprising:
a conductive element, an interior of the conductive element forming space for an RF wave to pass through;
a filler, made of RF-friendly material and disposed in the space;
an RFID tag, comprising:
an antenna, exposed to the space to receive the RF wave; and
a memory for recording data; and
a case for assembling the conductive element, the filler, and the RFID tag;
wherein the data is propagated inside the waveguide device wirelessly in response to the receipt of the RF wave.

16. The container of claim 15, wherein the container has a receiving room to locate the waveguide device stably, and the data correspond to items in the container.

17. The container of claim 15, wherein the waveguide device is disposed above the items.

18. The container of claim 15, wherein the waveguide device is disposed under the items.

19. The container of claim 15, wherein the waveguide device is disposed aside the items.

20. The container of claim 15, wherein the waveguide device is disposed among the items.

21. A waveguide device comprising:
a case for forming space inside, the case having at least one part made of conductive material, the space allowing an RF wave to pass through; and
an RFID tag mounted on an interior side of the case, comprising:
an antenna, exposed to the space to receive the RF wave; and
a memory for recording data;
wherein the data is propagated in the space wirelessly in response to the receipt of the RF wave.

22. The waveguide device of claim 21, wherein the case is a cylinder whose surface comprises the conductive material.

23. The waveguide device of claim 21, wherein the part comprises two opposite surfaces of the case.

24. The waveguide device of claim 21, wherein the conductive material is formed by one of foil stamping, foil plating, and metallic ink pressing.

25. The waveguide device of claim 21, wherein at least two surfaces of the case are made of RF-friendly material for the RF wave to pass through.

26. The waveguide device of claim 21, wherein a rest part of the case is made of paper or plastics.

27. A container comprising:
a waveguide device for forming space inside, the waveguide device having at least one part made of conductive material, the space allowing an RF wave to pass through; and
an RFID tag mounted on an interior side of the waveguide device, comprising:
an antenna, exposed to the space to receive the RF wave; and
a memory for recording data;
wherein the data is propagated in the waveguide device wirelessly in response to the receipt of the RF wave.

28. A method for manufacturing a waveguide device, comprising steps of:
forming a filler;
fixing an RFID tag to the filler;
coating conductive slices on a part of a plane;
converting the plane into a case to make the conductive slices located on two opposite surfaces of the case; and
disposing the filler with the RFID tag into the case to produce the waveguide device.

29. The method of claim 28, wherein the forming step comprises steps of:
cutting a board into a particular outline so that the board is divided into a plurality of units, the board being made of RF-friendly material; and
folding the board to make the plurality of units stacked up on each other.

30. The method of claim 29, wherein the cutting step is executed by using die-cutting.

31. The method of claim 28, wherein the forming step comprises steps of:
cutting a board to generate a plurality of separate units, the board being made of RF friendly material; and
stacking up the plurality of units.

32. The method of claim 31, wherein the cutting step is executed by using die-cutting.

33. The method of claim 28, wherein the forming step comprises a step of punching the filler to generate a hole.

34. The method of claim 28, wherein the forming step comprises a step of cutting the filler into a shape comprising a shaft and a rectangular frame.

35. The method of claim 28, wherein the coating step is executed by using one of foil stamping, foil plating, and metallic ink press.

36. The method of claim 28, wherein the plane is made of paper or plastics.
